# EUROPÄISCHE PATENTSCHRIFT

(11) **EP 1 676 421 B1**
(45) Veröffentlichungstag und Bekanntmachung des Hinweises auf die Patenterteilung: **01.04.2009**
(21) Anmeldenummer: 04770262.6
(22) Anmeldetag: 15.10.2004
(51) Int. Cl.: H04L 29/08

(54) **VERFAHREN ZUM SCHRITTWEISEN AUSTAUSCH PERSÖNLICHER INFORMATIONEN IN NON-TRUSTED PEER-TO-PEER-UMGEBUNGEN**
PROCESS FOR THE GRADUAL EXCHANGE OF PERSONAL INFORMATION IN NON-TRUSTED PEER-TO-PEER ENVIRONMENTS
PROCEDE D'ECHANGE GRADUEL D'INFORMATIONS PERSONNELLES DANS DES ENVIRONNEMENTS NON CONFIDENTIELS POSTE A POSTE

(30) Priorität: 16.10.2003 EP 03103836
(43) Veröffentlichungstag der Anmeldung: 05.07.2006
(73) Patentinhaber: Philips Intellectual Property & Standards GmbH, 20099 Hamburg (DE); Koninklijke Philips Electronics N.V., 5621 BA Eindhoven (NL); IHP GmbH - Innovations for High Performance Microelectronics, 15236 Frankfurt / Oder (DE)
(72) Erfinder: FALCK, Thomas, Weisshausstr. 2, 52066 Aachen (DE); MAASS, Henning, Weisshausstr. 2, 52066 Aachen (DE); WEIDENHAUPT, Klaus, Weisshausstr. 2, 52066 Aachen (DE); LANGENDÖRFER, Peter, Weisshausstr. 2, 52066 Aachen (DE)
(74) Vertreter: Volmer, Georg
(86) Internationale Anmeldenummer: PCT/IB2004/052103
(87) Internationale Veröffentlichungsnummer: WO 2005/039149

(56) Entgegenhaltungen:
- US-A1- 2001 055 950
- US-A1- 2002 184 153

## Beschreibung

In öffentlichen Einrichtungen oder auf öffentlichen Plätzen ist zunehmend die Möglichkeit vorhanden, über Funknetzwerke mit anderen Personen in Kontakt zu treten. Insbesondere bei sogenannten Peer-to-Peer Netzwerken ist oftmals eine gegenseitige Identifikation erforderlich. Ein typisches Szenario ist beispielsweise die Kontaktaufnahme zu gleichgesinnten Personen in einer Flughafen-Lounge. Über mobile Geräte, wie beispielsweise PDAs (Palmtop-Computer) oder Smartphones (internetfähige Handys) ist es möglich, solche Personen über eine Kurzstrecken-Funkverbindung (beispielsweise Bluetooth oder IEEE 802.11 wireless LAN) zu ermitteln und gegenseitig persönliche Informationen auszutauschen. Derzeit muss eine der beiden Personen, die Daten austauschen wollen, in Vorleistung treten und als erster seine persönlichen Daten an den anderen übertragen. Da noch kein Vertrauensverhältnis zwischen den Personen besteht, hat diese Person das Risiko, dass die andere ihre Daten empfängt, ihrerseits jedoch ihre persönlichen Daten nicht preisgibt. Eine Möglichkeit, dieses Risiko einzuschränken, besteht darin, Details des persönlichen Profils erst nach und nach preiszugeben. Hierzu bieten die mobilen Geräte oftmals die Möglichkeit, persönliche Nutzerprofile anzulegen, die über Flags in ihrem Detaillierungsgrad in Abhängigkeit vom Kommunikationspartner angepasst werden können. Das Risiko der einseitigen Preisgabe von Grundinformationen bleibt hier jedoch bestehen.

US Patent Anmeldung US-A-2002/0184153 handlet sich um ein System um automatisch Offenlegung von persönlischen Daten zu erlauben. In dieses System, nur gemeinsamen Daten werden zu dem Partner offengelegt.

Hier will die Erfindung Abhilfe schaffen. Der Erfindung liegt die Aufgabe zugrunde, ein Verfahren zum schrittweisen Austausch persönlicher Informationen in non-trusted Peer-to-Peer Umgebungen zu schaffen, das eine ausgewogene Risikoverteilung beider Kommunikationspartner gewährleistet. Erfindungsgemäß wird diese Aufgabe dadurch gelöst, dass die Informationen in mehrere unabhängige Teile zerlegt werden, welche wechselseitig Zug um Zug zwischen mindestens zwei Kommunikationspartnern ausgetauscht werden.

Mit der Erfindung ist ein Verfahren zum schrittweisen Austausch persönlicher Informationen in non-trusted Peer-to-Peer Umgebungen geschaffen, das eine ausgewogene Risikoverteilung beider Kommunikationspartner gewährleistet. Durch den wechselseitigen Austausch unabhängiger Teile der Informationen ist gewährleistet, dass sich diese gleichmäßig bei beiden Kommunikationspartnern schrittweise zu einem Sinnzusammenhang zusammenfügen.

In Weiterbildung der Erfindung wird die Textdarstellung der Informationen vor der Zerlegung in eine graphische Darstellung konvertiert. Hierdurch ist eine systemunabhängige Lesbarkeit der Informationen nach Zusammensetzung der Einzelteile gewährleistet. Darüber hinaus wird die Ermittlung fehlender Informationsteile über algorithmische Prozeduren verhindert.

In Ausgestaltung der Erfindung erfolgt die Zerlegung und der Austausch der Informationen in der Weise, dass jede Informationseinheit für sich einen für den Benutzer erkennbaren Informationsbeitrag liefert. Hierdurch wird eine Bewertung der empfangenen Teilinformationen durch den Empfänger ermöglicht, wodurch ein ausgeglichener Informationsaustausch gefördert wird.

Vorzugsweise wird die grafische Darstellung der Informationen in n Zeilen und m Spalten eingeteilt, wodurch sich eine Matrix aus n x m Feldern ergibt. Hierdurch wird das Zusammenfügen der graphischen Einzelteile zu einem Puzzle ermöglicht.

Vorteilhaft wird das Raster der Matrix vor der Zerlegung der Informationen zwischen den Kommunikationspartnern vereinbart. Hierdurch ist gewährleistet, dass die Informationszerlegung auf beiden Seiten gleichartig erfolgt, wodurch der Austauchprozess harmonisiert wird. Darüber hinaus wird die Visualisierung der schrittweise zusammengefügten Informationen erleichtert.

Bevorzugt wird das Raster der Matrix standardisiert. Hierdurch erübrigt sich eine vorherige Vereinbarung über das Raster, wodurch der Informationsaustausch beschleunigt wird.

In Weiterbildung der Erfindung wird jedem Informationsfragment seine Position in der Matrix beigefügt. Hierdurch ist die Zusammensetzung der Gesamtinformation vereinfacht.

In Ausgestaltung der Erfindung kann der Informationsaustausch von beiden Partnern jederzeit abgebrochen werden. Hierdurch wird jedem Partner ermöglicht, beispielsweise im Falle eines stark differierenden Informationsgehaltes der sich zusammenfügenden Informationsfragmente die Übertragung seiner persönlichen Informationen zu beenden.

In weiterer Ausgestaltung der Erfindung können jederzeit die noch nicht übermittelten Informationsteile in einem Zug übermittelt werden. Hierdurch ist die Beschleunigung des Informationsaustausches jederzeit ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
Figur 1 Das Ablaufdiagramm des erfindungsgemäßen Verfahrens;
Figur 2 Schritt 1 bis 3 der Zusammenfügung einer in 42 Teile zerlegten Information;
Figur 3 Schritt 4 bis 6 der Informationszusammenfügung aus Figur 2;
Figur 4 Schritt 7 bis 9 der Informationszusammenfügung aus Figur 2;
Figur 5 Schritt 22 bis 24 der Informationszusammenfügung aus Figur 2;
Figur 6 Schritt 37 bis 39 der Informationszusammenfügung aus Figur 2 und
Figur 7 Schritt 40 bis 42 der Informationszusammenfügung aus Figur 2

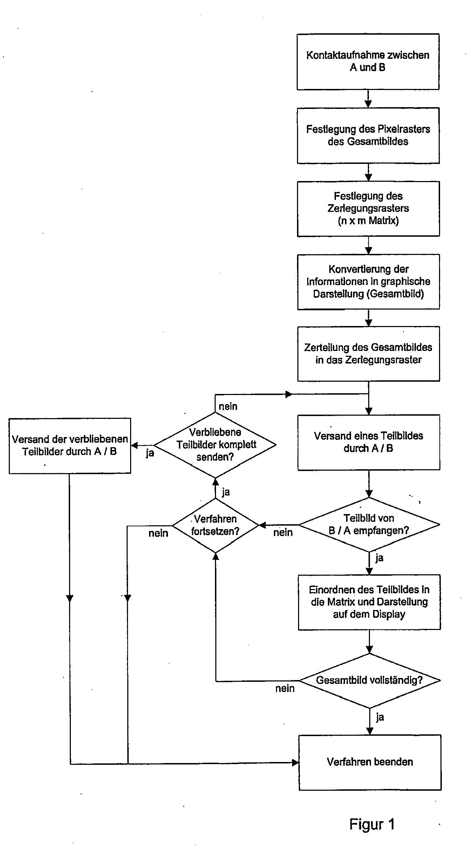

Im Anwendungsbeispiel gemäß Figur 1 einigen sich A und B darauf, gegenseitig persönliche Informationen auszutauschen. Zunächst teilt A B mit, welche Größe (Pixelbreite/-höhe) das von B an A zu liefernde Gesamtbild haben soll. B macht dies analog. Im Anschluss an die Festlegung des Pixelrasters der Gesamtbilder einigen sich A und B auf die Anzahl der Zeilen (n) und Spalten (m), in die das jeweilige Bild unterteilt werden soll. Auf Basis dieser festgelegten Daten erfolgt nun bei A und B die Konvertierung der jeweiligen Informationen in eine grafische Darstellung. Liegen die Daten beispielsweise in XML vor, kann mit Hilfe von XSL Style sheets ein HTML-Dokument erzeugt werden, welches mittels eines Web-Browsers darstellbar ist. Die erzeugte graphische Darstellung wird anschließend in n Zeilen und m Spalten eingeteilt, wodurch sich eine Matrix mit n x m Feldern ergibt. Damit sind n x m Teilbilder eindeutig definiert. Die Teilbilder können in einem gängigen Bildformat (JPEG, GIF, o.ä.) abgespeichert werden. A wählt nun zufällig ein Teilbild aus und sendet es zusammen mit der Angabe der entsprechenden Zeilen- und Spaltennummer an B. B empfängt das Teilbild, ordnet es an der richtigen Position in der Matrix an und gibt es auf dem Display aus. Nun schickt B das Teilbild an A, das sich an der gleichen Position wie das soeben von A empfangene Teilbild befindet. A empfängt dieses Teilbild, ordnet es an der richtigen Position in der Matrix an und gibt es auf dem Display aus. Nach diesem Schema erfolgt nun analog der Austausch der jeweils verbleibenden Teilbilder. Für A und B besteht jederzeit die Möglichkeit, das Verfahren vorzeitig zu beenden und damit den Informationsaustausch abzubrechen. Hat ein Benutzer den Eindruck gewonnen, dem anderen vertrauen zu können, so kann er diesem zu jedem Zeitpunkt des Austauschprozesses anbieten, den Rest des Bildes auf einen Schlag auszutauschen, um den Vorgang zu beschleunigen. Willigt der andere ein, senden beide dem jeweils anderen die noch verbleibenden Teilbilder in einem Zug.

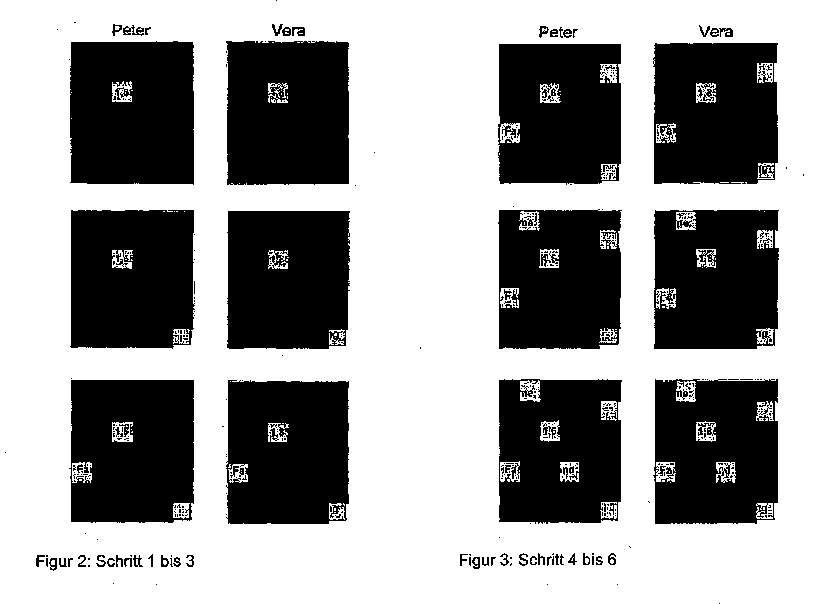

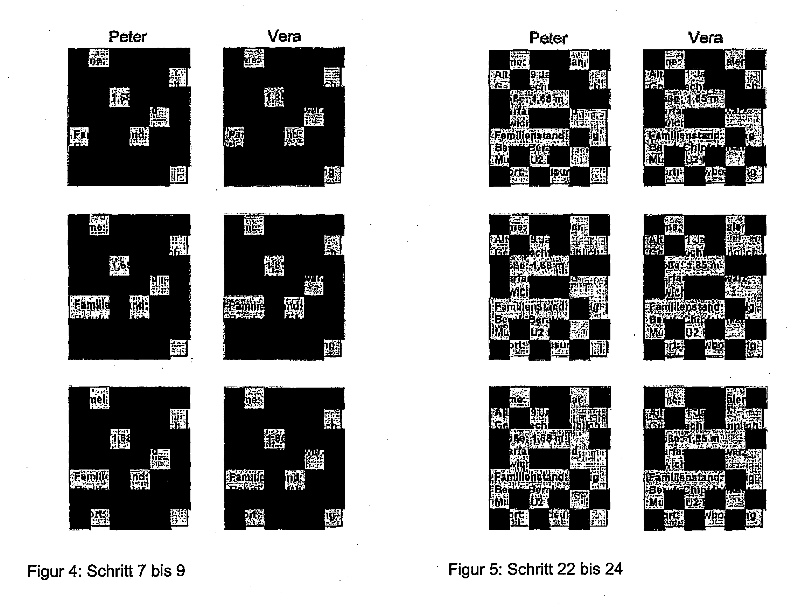

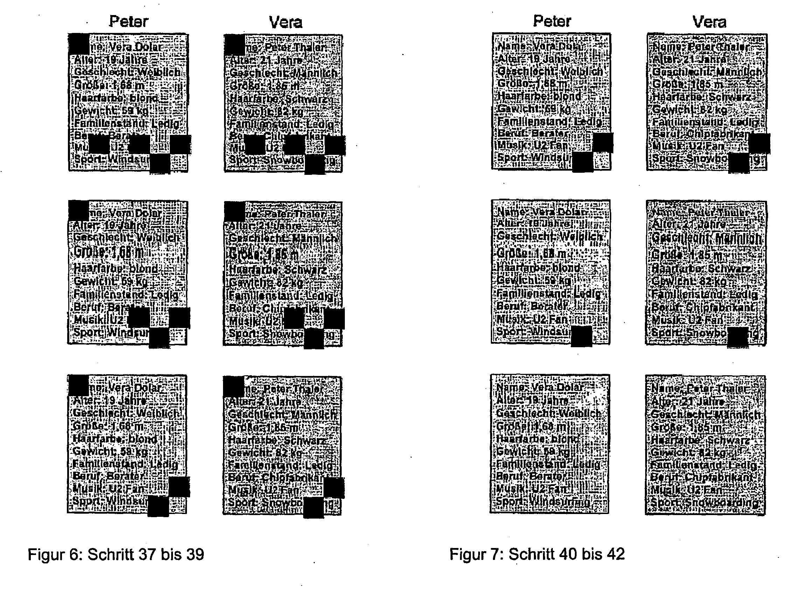

In dem Anwendungsbeispiel gemäß Figuren 2 bis 7 wird das Verfahren exemplarisch aus Sicht zweier Benutzer Peter und Vera verdeutlicht. Das aus den persönlichen Informationen erzeugte Bild hat eine Auflösung von 300 x 300 Pixeln und wurde in 7 x 6 Teilbilder zerlegt. Insgesamt sind daher 42 Teilbilder zu übertragen, bis der jeweils andere Benutzer das Bild vollständig sehen kann. Während die beiden Benutzer nach dem Austausch von 9 Teilbildern der Darstellung noch keine zusammenhängenden Informationen entnehmen können (vgl. Figur 4), sind nach dem Austausch von 24 Bildern bereits Teilinformationen wie Größe oder Haarfarbe erahnbar (vgl. Figur 5). Nach 37 Teilbildern (vgl. Figur 6) sind bereits wesentliche Informationen ausgetauscht, hier wäre beispielsweise der Versand der verbliebenen Teilbilder zur Beschleunigung des Austauschprozesses denkbar. Wurden alle 42 Teilbilder ausgetauscht, liegen den Benutzern Peter und Vera jeweils die vollständigen persönlichen Informationen ihres Gegenübers vor (vgl. Figur 7). Die Strukturierung der Informationen ist in diesem Anwendungsbeispiel willkürlich gewählt, selbstverständlich ist jede andere Gestaltung möglich. Auf die gleiche Weise lassen sich auch persönliche Bilder oder technische Zeichnungen etc. austauschen. Das Verfahren ist ohne Änderung für beliebige Datenformate anwendbar, in denen die auszutauschenden Informationen vorliegen. Der Empfänger muss sich nicht darum kümmern, wie die Daten dem Benutzer präsentiert werden sollen, da der Sender bereits Bilder liefert, die nur noch ausgegeben werden müssen. Der Benutzer erkennt schnell, ob die gelieferten Informationen für ihn von Interesse sind. (Bei Rohdaten ist dies für ihn wesentlich schwieriger zu entdecken, gegebenenfalls muss er warten, bis die Daten vollständig übertragen wurden.) Hierdurch ist ein Abbruch des Informationsaustausches zu einem frühen Zeitpunkt möglich, wodurch gewährleistet ist, dass der Benutzer keine persönlichen Daten ohne Gegenleistung preisgibt. Der Benutzer kann den Austauschvorgang jederzeit stoppen. Darüber hinaus schützt die Verwendung des graphischen Formates vor maschineller Auswertung und Weiterverarbeitung der persönlichen Daten durch Dritte.

## Patentansprüche

1. Verfahren zum schrittweisen Austausch persönlicher Informationen in non-trusted Peer-to-Peer Umgebungen, wobei die Informationen in mehrere unabhängige Teile zerlegt werden, welche wechselseitig Zug um Zug zwischen mindestens zwei Kommunikationspartnern ausgetauscht werden, **dadurch gekennzeichnet, dass** die Informationen vor Zerlegung und Versand in eine graphische Darstellung konvertiert werden.

2. Verfahren nach Anspruch 1, **dadurch gekennzeichnet, dass** die Zerlegung und der Austausch der Informationen in der Weise erfolgt, dass jede Informationseinheit für sich ein für den Benutzer erkennbaren Informationsbeitrag liefert.

3. Verfahren nach Anspruch 1, **dadurch gekennzeichnet, dass** die graphische Darstellung der Informationen in Zeilen und Spalten eingeteilt wird, wodurch sich eine Matrix aus n x m-Teilbildern ergibt.

4. Verfahren nach Anspruch 3, **dadurch gekennzeichnet, dass** das Raster der Matrix vor der Zerlegung der Informationen zwischen den Kommunikationspartnern vereinbart wird.

5. Verfahren nach Anspruch 3, **dadurch gekennzeichnet, dass** das Raster der Matrix standardisiert ist.

6. Verfahren nach einem der Ansprüche 3 bis 5, **dadurch gekennzeichnet, dass** jedem Informationsfragment seine Position in der Matrix beigefügt wird.

7. Verfahren nach einem der Ansprüche 1 bis 6, **dadurch gekennzeichnet, dass** der Informationsaustausch von beiden Partnern jederzeit abgebrochen werden kann.

8. Verfahren nach einem der Ansprüche 1 bis 7, **dadurch gekennzeichnet, dass** jederzeit die noch nicht übermittelten Informationsteile in einem Zug übermittelt werden können.

## Claims

1. A method for the exchange of personal information in a step-by-step fashion in non-trusted peer-to-peer environments, in which the information is segmented into several independent sections, which are mutually exchanged step by step between at least two communication partners, **characterized in that** the information is converted into a graphics display before segmentation and transmission.

2. A method as claimed in claim 1, **characterized in that** the segmentation and the exchange of information take place in such a way that each information unit provides for itself an information contribution recognizable to the user.

3. A method as claimed in claim 1, **characterized in that** the graphics display of the information is divided into rows and columns, so that a matrix of n x m-fields is formed.

4. A method as claimed in claim 3, **characterized in that** the grid of the matrix is agreed upon by the communication partners before segmentation of the information.

5. A method as claimed in claim 3, **characterized in that** the grid of the matrix is standardized.

6. A method as claimed in any one of the claims 3 to 5, **characterized in that** each information fragment has its position in the matrix attached to it.

7. A method as claimed in any one of the claims 1 to 6, **characterized in that** the information exchange can be aborted by either partner at any time.

8. A method as claimed in any one of the claims 1 to 7, **characterized in that** the information sections not yet transmitted can be transmitted in one step at any time.

## Revendications

1. Procédé de remplacement progressif d'informations personnelles dans des environnements "non-trusted peer-to-peer", les informations étant décomposées en plusieurs parties indépendantes qui sont échangées alternativement, une à la fois, entre au moins deux partenaires de communication, **caractérisé en ce que** les informations sont converties avant décomposition et expédition dans une représentation graphique.

2. Procédé selon la revendication 1, **caractérisé en ce que** la décomposition et l'échange des informations sont effectués de telle manière que chaque unité d'information fournisse pour elle-même une contribution d'information reconnaissable pour l'utilisateur.

3. Procédé selon la revendication 1, **caractérisé en ce que** la représentation graphique des informations est subdivisée en lignes et colonnes, une matrice de n x m images partielles étant obtenue.

4. Procédé selon la revendication 3, **caractérisé en ce que** la trame de la matrice est convenue avant la décomposition des informations entre les partenaires de communication.

5. Procédé selon la revendication 3, **caractérisé en ce que** la trame de la matrice est standardisée.

6. Procédé selon l'une des revendications 3 à 5, **caractérisé en ce que** sa position dans la matrice est ajoutée à chaque fragment d'information.

7. Procédé selon l'une des revendications 1 à 6, **caractérisé en ce que** l'échange d'informations peut à tout moment être interrompu par les deux partenaires.

8. Procédé selon l'une des revendications 1 à 7, **caractérisé en ce que** les fragments d'information qui n'ont pas encore été transmis peuvent à tout moment être transmis en une fois.
